(19) Europäisches Patentamt
European Patent Office
Office européen des brevets

(11) **EP 2 733 891 A1**

(12) **EUROPEAN PATENT APPLICATION**

(43) Date of publication:
**21.05.2014 Bulletin 2014/21**

(51) Int Cl.:
*H04L 12/26* (2006.01)   *H04M 3/30* (2006.01)

(21) Application number: **12290399.0**

(22) Date of filing: **20.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
- **Drooghaag, Benoit**
  **1421 Ophain-Bois-Seigneur-Isaac (BE)**
- **Verstappen, Davy**
  **2000 Antwerpen (BE)**

(74) Representative: **IP Hills NV**
**Patents**
**Hubert Frère-Orbanlaan 329**
**9000 Gent (BE)**

(54) **A device and method for quantifying network infrastructure degradation**

(57)     A device (100) for quantifying network infrastructure degradation resulting from a physical phenomenon comprises a diagnosis engine (101), a service impact engine (102) and an aggregation engine (104). The diagnosis engine (101) collects parameter values for N lines (LINE-1, LINE-2, ..., LINE-N) in a network. The service impact engine (102) calculates from the collected parameter values (111 a) a service impact value for M different problem types (PROBLEM-1, PROBLEM-2, ..., PROBLEM-M) on each one of the N lines (LINE-1, LINE-2, ..., LINE-N). The aggregation engine (104) aggregates the service impact values (122) for a predefined subset of lines affected by the physical phenomenon and a predefined subset of problem types being caused by the physical phenomenon in order to quantify the network infrastructure degradation.

CONFIDENCE ENGINE — 131

| | LINE-1 | LINE-2 | ... | LINE-N |
|---|---|---|---|---|
| PROBLEM-1 | 0 % | 95 % | ... | 80 % |
| PROBLEM-2 | 0 % | 10 % | ... | 100 % |
| ... | ... | ... | ... | ... |
| PROBLEM-M | 0 % | 99 % | ... | 0 % |

SERVICE IMPACT ENGINE — 121

| | LINE-1 | LINE-2 | ... | LINE-N |
|---|---|---|---|---|
| PROBLEM-1 | 0 Mbps | 2 Mbps | ... | 3 Mbps |
| PROBLEM-2 | 0 Mbps | 0 Mbps | ... | 1 Mbps |
| ... | ... | ... | ... | ... |
| PROBLEM-M | 0 Mbps | 5 Mbps | ... | 0 Mbps |

Fig. 1

EP 2 733 891 A1

**Description**

**Field of the Invention**

The present invention generally relates to quantifying network infrastructure degradation resulting from a physical phenomenon like for instance corrosion, i.e. quantifying the effect of a physical degradation phenomenon affecting network infrastructure like cables, binders, interconnect panels, etc. on the services offered over a group of lines in a network. By providing a metric for quantifying network infrastructure degradation, network operators are given a tool enabling to proactively maintain or replace network infrastructure elements that could potentially lead to service interruption or severe service impact causing customers complaints.

**Background of the Invention**

The increasing demand for service such as Video-on-Demand (VoD), Internet Protocol Television (IPTV) and Triple-Play services, i.e. the congruent provision of voice, television and Internet services, puts challenges on network operators to permanently estimate the quality of their network infrastructure in order to be able to pro-actively maintain or replace network infrastructure elements that potentially impact the service as a result of physical degradation. Corrosion for instance is a type of physical degradation that typically degrades interconnect panels or patch panels very slowly, but after a certain time impacts the service on several lines.

Access network infrastructure like for instance Digital Subscriber Line (DSL) equipment is usually deployed in street cabinets that are subject to harsh environmental conditions such as temperature and humidity variations, water ingress, etc. Moreover, these DSL services are usually offered over old cable infrastructures that are installed in the field for decades. In such DSL networks, corrosion typically occurs in patch panels that can be found in central offices, in street cabinets or in buried underground boxes.

A straightforward solution to deal with degradation resulting from physical phenomena like corrosion could consist in replacing network infrastructure elements like patch panels at a regular pace, e.g. every 10 years. Such solution however is expensive and will lead to unnecessary replacement of a lot of network equipment that is still in good shape.

Alternatively, a network operator could apply a reactive approach and wait until the service quality has dropped to an unacceptably low level and then replace the network infrastructure elements affecting the service quality. Such reactive approach however leaves many customers unsatisfied since the network operator shall only react when the service is interrupted or when the service quality experienced by customers has gradually gone down over a longer period.

In order to be able to deploy a more proactive approach, a network operator needs to be able to identify patch panels or other network infrastructure elements that are affected before the service gets degraded to an unacceptable level. Network operators therefore typically rely on feedback from field technicians that report visibly noticeable infrastructure degradation like corrosion of patch panels in street cabinets. Feedback of field technicians usually is not proactive. A filed technician is sent to a street cabinet or network infrastructure element after a complaint from a customer. Further, feedback of field technicians is not very reliable since it is based on visual inspection and a subjective assessment by the field technician.

Whereas technology has been developed to quantify the impact of a problem on a single line, e.g. through reflectometry based Single-Ended Line Testing (SELT), Signal-to-Noise Ratio (SNR) measurements, etc., no technology is available to objectively quantify the effect of a physical phenomenon on a group of lines considered together, e.g. a group of lines connected to the same patch panel or a group of lines forming part of the same binder.

It is therefore an objective of the present invention to disclose a device and method for quantifying network infrastructure degradation resulting from a physical phenomenon that overcomes the above-identified shortcomings of existing solutions. More particularly, it is an objective to disclose a device and method for quantifying network infrastructure on a group of lines, that does not rely on the subjective observation by field technicians, and that enables the network operator to proactively replace a network infrastructure element affected by a physical phenomenon before services running over this network infrastructure element degrade to an unacceptably low level.

**Summary of the Invention**

According to the present invention, the above defined objectives are realized by the device for quantifying network infrastructure degradation resulting from a physical phenomenon defined by claim 1, the device comprising:

- a diagnosis engine for collecting parameter values for N lines in a network, N being a first positive integer value greater than one;
- a service impact engine for calculating from the collected parameter values a service impact value for M different problem types on each one of the N lines, M being a second positive integer value; and

- an aggregation engine for aggregating service impact values received from the service impact engine for a predefined subset of lines out of the N lines and a predefined subset of problem types out of the M different problem types, the subset of lines being affected by the physical phenomenon and the subset of problem types being caused by the physical phenomenon.

Indeed, the invention relies on use of a diagnosis engine that collects a list of parameter values for individual lines in the network, e.g. a network analyser that collects parameter values measured by the central office (CO) or customer premises equipment (CPE) in DSL networks. Starting from the collected parameter values for individual lines, a service impact engine quantifies the service impact on individual lines of different problem types, like for instance capacitive coupling, bad contacts, bridged taps, mismatched line segments, missing POTS splitters, presence of surge protections, electro-magnetic noise pick-up, crosstalk, Radio Frequency Interference (RFI), etc. The present invention further relies upon an aggregation engine that aggregates the service impact over a predetermined group of lines, e.g. all lines connected to a given patch panel, and over a predetermined subset of problem types that are caused by the same physical phenomenon. This way, the device according to the present invention aggregates the effect of a single physical phenomenon on all potentially affected lines in a single metric that easily enables the network operator to judge when a network infrastructure element needs to be replaced or repaired.

In a preferred embodiment of the device for quantifying network infrastructure degradation according to the present invention, defined by claim 2, the aggregation engine is adapted to sum the service impact values calculated for the subset of problems and the subset of lines.

Indeed, the most simple to implement and easiest to interpret form of aggregation sums the service impact, e.g. the impact on the bit rate expressed in Megabits per second (Mbps), over the predefined subset of lines and predefined subset of problem types. Obviously, other functions like a weighted sum, a mean, a median, a percentile, an extremum, etc. could be considered for aggregating the service impact for a line group and problem type group.

According to an optional aspect defined by claim 3, the device for quantifying network infrastructure degradation according to the present invention further comprises:

- a confidence engine for calculating from the collected parameter values a confidence value for the M different problem types on each one of the N lines, each confidence value representing a probability of presence of a problem type on a line; and
- the aggregation engine further is adapted to aggregate for each line in the predefined subset of lines only service impact values for problem types whose confidence value on the line exceeds a predefined confidence threshold.

Thus, the invention optionally takes benefit of confidence values that represent the probability of presence of a certain problem type on a line, usually expressed as a percentage. To increase the reliability of the metric, only the service impact of problems detected with a confidence higher than a given threshold would be considered for aggregation.

In a particular embodiment of the device for quantifying network infrastructure degradation according to the present invention, defined by claim 4:

- the physical phenomenon is corrosion;
- the predefined subset of problem types comprises capacitive coupling and electromagnetic noise pick-up;
- the service impact value for capacitive coupling on a line corresponds to a first bit rate difference value obtained by a scaled sum across all sub-carriers of a difference between a measured channel frequency impulse response on the line and a theoretical achievable channel frequency response on the line in absence of corrosion;
- the service impact value for electromagnetic noise pick-up on the line corresponds to a second bit rate difference value obtained by a scaled sum across all sub-carriers of a difference between a theoretical background noise level on the line in absence of corrosion and a measured background noise level on the line; and
- the aggregating of service impact values comprises summing the service impact value for capacitive coupling and the service impact value for electromagnetic noise pick-up for the subset of lines.

Thus, one particular embodiment of the present invention may be configured to detect and quantify network infrastructure degradation resulting from corrosion. A first typical problem resulting from corrosion is that a thin oxidation layer is created between the metallic parts of a connector. This thin oxidation layer acts as an insulator, a problem that is known as capacitive coupling. Capacitive coupling strongly impacts the lower frequencies and may be quantified by looking at the difference between the measured channel frequency response, and the ideal, theoretical channel frequency response that may be obtained by extrapolating the channel frequency response curve measured at the higher frequencies where capacitive coupling has no effect. In an Orthogonal Frequency Division Multiplexing (OFDM) based system like for instance a DSL network, where the channel frequency response is measured on each line, e.g. the so called Hlog data collected during initialisation, the impact of capacitive coupling can be quantified by summing and scaling the difference between the measured and theoretical channel frequency response over the different sub-carriers in the OFDM system. The scaling is needed for the conversion between the measured channel frequency response which is expressed in dB and the decrease in bit rate which is expressed in kbps. A second typical problem resulting from corrosion is electromagnetic noise pick-up. Since corrosion is uncontrolled by nature, it will typically induce an asymmetry in the impedance of wires, degrading the loop balance and rendering the line more sensitive to noise ingress. The noise ingress typically results in noise spikes in the measured noise. In case of an OFDM based system like a DSL network, where the Quiet Line Noise (QLN) level is measured on each line during initialization, the impact of electromagnetic noise pick-up can be quantified by summing and scaling the difference between the measured noise level and the theoretical ideal noise level over the different sub-carriers in the OFDM system. The scaling is needed for the conversion between the QLN which is expressed in dBm/Hz and the decrease in bit rate which is expressed in kbps. The theoretical ideal noise level can be determined by low-pass filtering the measured noise level to remove the noise spikes. By aggregating over a group of lines connected for instance to the same patch panel the quantified service impact of capacitive coupling and the quantified service impact of electromagnetic noise pick-up, the network operator obtains an objective metric for degradation of the patch panel through corrosion that can be used to determine the point in time whereon the patch panel needs to be replaced.

In addition to a device for quantifying network infrastructure degradation resulting from a physical phenomenon, as defined by claim 1, the present invention also relates to a corresponding method as defined by claim 5, the method comprising:

- collecting parameter values for N lines in a network, N being a first positive integer value greater than one;
- calculating from the collected parameter values a service impact value for M different problem types on each one of the N lines, M being a second positive integer value; and
- aggregating service impact values for a predefined subset of lines out of the N lines and a predefined subset of problem types out of the M different problem types, the subset of lines being affected by the physical phenomenon and the subset of problem types being caused by the physical phenomenon.

The present invention further also relates to a data processing system as defined by claim 6, comprising means for carrying out the method, and a computer program as defined by claim 7, comprising software code adapted to perform the method.

The invention further also concerns a computer readable storage medium as defined by claim 8, comprising the computer program.

## Brief Description of the Drawings

Fig. 1 is a functional block scheme of an embodiment of the device for quantifying network infrastructure degradation according to the present invention;

Fig. 2 is a graph illustrating the service impact of a first problem resulting from corrosion, i.e. capacitive coupling, in an embodiment of the present invention; and

Fig. 3 is a graph illustrating the service impact of a second problem resulting from corrosion, i.e. electromagnetic noise pick-up, in an embodiment of the present invention.

## Detailed Description of Embodiment(s)

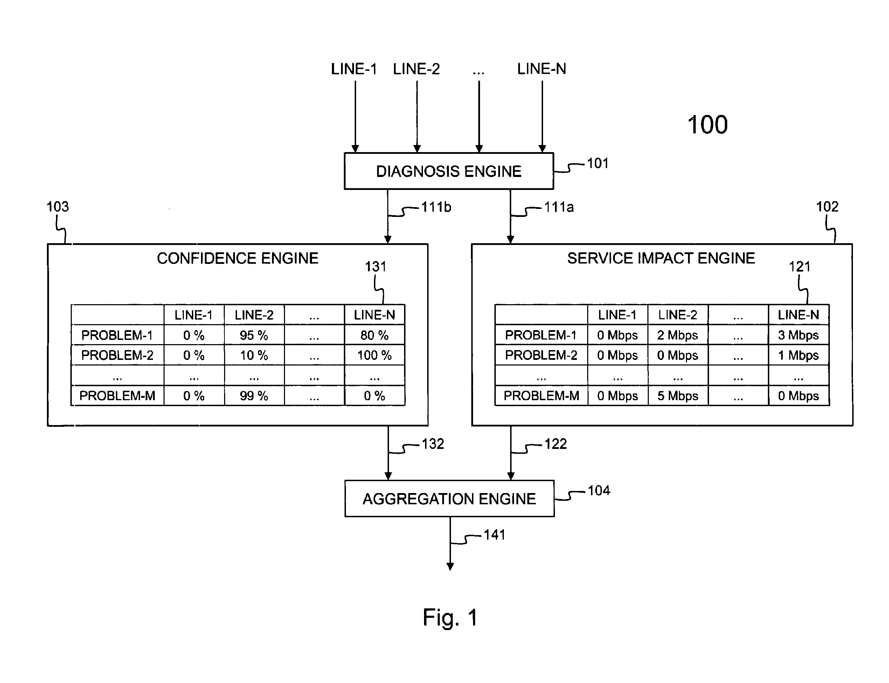

Fig. 1 shows a device 100 for quantifying network infrastructure degradation operating according to the present invention. The device 100 comprises a diagnosis engine 101, a service impact engine 102, a confidence engine 103 and an aggregation engine 104, the operation of which will be described in more detail below.

In Fig. 1, a network of N DSL lines, LINE-1, LINE-2, ... LINE-N, is subject to degradation monitoring according to the present invention. For these N lines, the diagnosis engine 101 coiiects a number of parameters values measured by the DSL modems connected to these lines. These parameter values may for instance include the channel frequency response or so called Hlog data measured for each of the sub-carriers, the Signal-to-Noise Ratio or SNR measured for the different sub-carriers, the Quiet Line Noise or QLN measured for each sub-carrier, etc. These parameter values or a selection thereof are fed to the service impact engine 102 as is indicated by 111a and to the confidence engine 103 as indicated by 111b. It is noticed that the selection 111a of parameter values that is shared with the service impact engine 102 may differ from the selection 111b of parameter values that is shared with the confidence engine 103.

The service impact engine 102 calculates for each of the lines, LINE-1, LINE-2, ... LINE-N, and for a number of problem types that may occur on the lines, PROBLEM-1, PROBLEM-2, ..., PROBLEM-M, a service impact value, for instance the impact of that problem on the bit rate on that line expressed in Mbps. These calculations result in a service impact table 121.

Similarly, the confidence engine 103 calculates for each of the lines, LINE-1, LINE-2, ... LINE-N, and for a the different considered problem types that may occur on the lines, PROBLEM-1, PROBLEM-2, ..., PROBLEM-M, a confidence value that represents the probability that a certain problem affects a given line, typically expressed as a percentage. These calculations result in a confidence table 131.

The aggregation engine 104 receives the service impact values 122 from the service impact engine 102 and the confidence values 132 from the confidence engine 103 and further aggregates these values for a given subset of lines, e.g. all the DSL lines connected to a same patch panel, and for a subset of problem types, e.g. all problems being caused or affected by a same physical phenomenon.

The most simple form of aggregation that could be applied by the aggregation engine 104 would be to sum the impacts for the subset of lines and the subset of problem types. This would result in the following aggregated impact 141:

$$\text{Aggregated impact (Line Subset, Problem Subset)} =$$

$$\sum_{i \text{ in Line Subset}} \sum_{j \text{ in Line Subset}} \text{impact}_{ij} \qquad (1)$$

Alternatively, the aggregation engine 104 could apply other aggregation functions like a weighted sum, a mean, a median, a percentile, an extremum, etc. According to an optional refinement of the invention, the aggregation engine 104 takes into account the confidence values 132 in aggregating the service impact values 122. For example, only the impact values of problems detected with a confidence higher than a given threshold could be summed or aggregated by the aggregation engine 104. This would result in the following aggregated impact 141:

$$\text{Aggregated impact (Line Subset, Problem Subset)} =$$

$$\sum_{i \text{ in Line Subset}} \sum_{j \text{ in Line Subset}} \begin{cases} \text{Impact}_{ij} & (\text{confidence}_{ij} \geq \text{Threshold}) \\ 0 & (\text{otherwise}) \end{cases} \qquad (2)$$

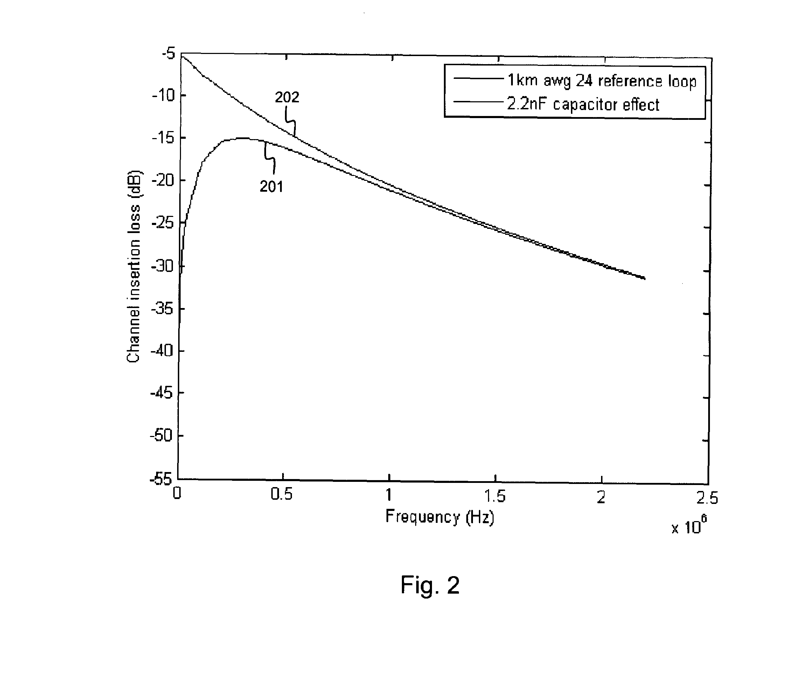

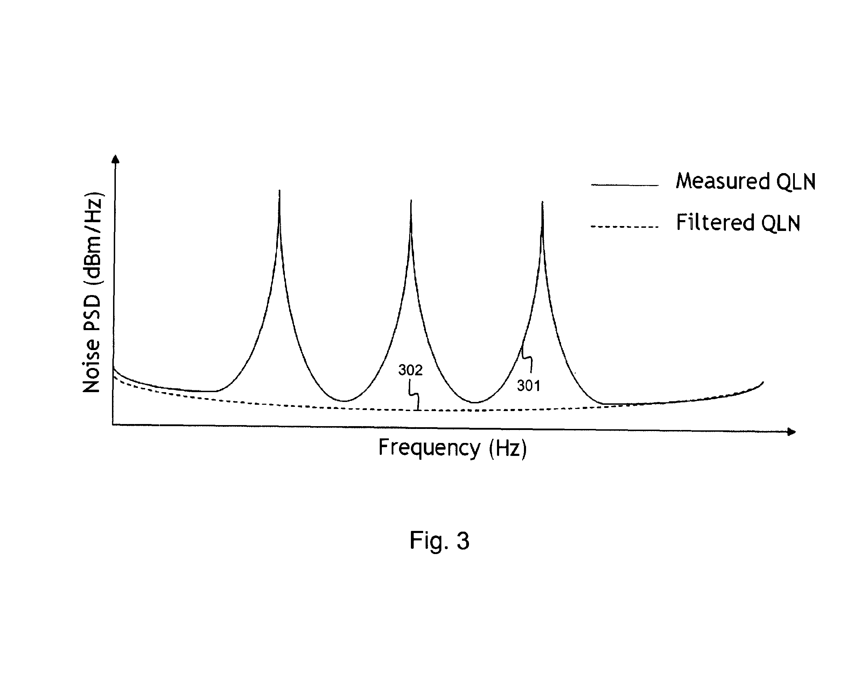

With reference to Fig. 2 and Fig. 3, an embodiment of the invention will be described below enabling timely detection of corrosion in a patch panel where DSL lines are connected to. Corrosion in a patch panel will create bad contacts, and induce a variety of problems on DSL lines. Those problems can generally be classified in two categories: capacitive coupling having an impact on the channel transfer function, and electromagnetic noise pick-up as a result of degradation of the cable balance. For both types of problems, the impact on the service in terms of decrease in bitrate can be quantified for each individual line. Thereafter, the impacts on all lines connected to the patch panel are aggregated to quantify the degradation of the patch panel as a result of corrosion.

A first problem caused by corrosion hence is capacitive coupling. Corrosion creates a thin oxidation layer between the two metallic parts of each connector in the patch panel. As this oxidation layer is acting as an insulator, it results in a small capacitor inserted in series on the DSL line. This phenomenon, called capacitive coupling, is strongly impacting the lower frequencies since the capacitor is acting basically as an open-circuit for low frequencies. As a consequence, capacitive coupling results in a high-pass filter effect on the channel frequency response. This is illustrated in Fig. 2 which shows the channel frequency response 201 measured for a DSL line connected to a patch panel plagued by corrosion and the channel frequency response 202 of a reference DSL line that does not suffer from capacitive coupling.

The service impact of capacitive coupling, i.e. the impact on the achievable bit rate on a DSL line, in an embodiment of the invention is quantified by the service impact engine by looking at the difference between the measured channel frequency response 201 for that line, and the ideal channel frequency response 202 that is reconstructed by extrapolation of the measured curve 201 at the high frequencies where the capacitive coupling has no effect to the low frequencies. In DSL systems, the channel frequency response also called Hlog is measured by each modem during the line initialization phase. The impact on the achievable bit rate is then estimated as follows:

$$\text{Bit Rate Impact} = \sum_i \frac{(\text{Corrected\_Hlog}_i - \text{Hlog}_i)}{x} \cdot \text{SR} \qquad (3)$$

Herein,

- i represents the index of sub-carriers in the DSL OFDM system such that the sum is performed across all available sub-carriers;
- Hlog represents the measured channel frequency response, in dB;
- Corrected_Hlog represents the ideal channel frequency response as reconstructed through extrapolation, in dB;
- x represents the SNR increase needed to code one extra bit knowing the modulation type and coding gain (typically 3dB); and
- SR represents the symbol rate, i.e. 4000 for DSL.

It is noticed that the service impact quantification according to formula (3) can be applied for all types of problems impacting the channel transfer function: the presence of bad contacts or capacitive coupling, but also the presence of bridged taps, the presence of mismatched cable segments, the presence of a one-wire tap, absence of POTS splitters, the presence of a surge protection, etc. Obviously not all of these problems are caused by oxidation or corrosion. Therefore, it is important to aggregate only the right subset of problem types in order to be able to estimate the degradation possibly resulting from corrosion. This is done is the aggregation step.

A second problem caused by corrosion is electromagnetic noise pick-up resulting from loop unbalance. Indeed, a DSL line consists of twisted pair copper wires. Corrosion will impact the connection of both wires within a connector, but most probably to different extent, as the corrosion process is uncontrolled by nature. This will induce asymmetry in the impedance of the wires, degrading the loop balance. As a consequence, the line will be more sensitive to noise ingress, e.g. crosstalk, Radio Frequency Interference (RFI) from AM radio stations, etc., generally called electromagnetic noise pick-up. In DSL systems, the background noise also called Quiet Line Noise (QLN) is measured by each modem during the line initialization phase. Starting from this measurement, noise ingress like RFI can be detected and the service impact in terms of decrease of achievable bit rate can be quantified by the service impact engine 102.

The service impact is estimated by looking at the difference between the measured noise level or QLN 301 and the ideal noise level 302 on the DSL line in absence of corrosion, both shown in Fig. 3. This ideal noise level 302 is obtained through reconstructed by elimination of the RFI spikes, e.g. via low-pass filtering of the measured QLN curve 302. The impact on the achievable bit rate is then obtained as follows:

$$\text{Bit Rate Impact} = \sum_i \frac{(\text{QLN}_i - \text{Corrected\_QLN}_i)}{x} \cdot \text{SR} \qquad (4)$$

Herein,

- i represents the index of sub-carriers in the DSL OFDM system such that the sum is performed across all available sub-carriers;
- QLN represents the measured noise level on the line, in dBm/Hz;
- Corrected_QLN represents the ideal noise level as reconstructed through filtering, in dBm/Hz;
- x represents the SNR increase needed to code one extra bit knowing the modulation type and coding gain (typically 3dB); and
- SR represents the symbol rate, i.e. 4000 for DSL.

It is noticed that the service impact quantification according to formula (4) can be applied for all types of problems inducing noise: RFI from AM radio stations, but also RFI from switching power supply units, abnormal self-crosstalk or alien-crosstalk, etc. Obviously not all of these problems are caused by oxidation. Therefore, it is important to aggregate only the right subset of problem types in the aggregation step in order to be able to quantify possible degradation through corrosion.

Focusing again on the detection of corrosion in patch panels, this physical phenomenon causes capacitive coupling and an increase of electromagnetic noise pick-up from the environment, i.e. self-crosstalk in the case of patch panels and possibly RFI from AM radio stations if the patch panel is not underground. Summing the impacts (3) and (4) of those two problem types for all the DSL lines connected to a single patch panel will provide a quantification of the service degradation due to corrosion of that patch panel. Obviously, before doing so, all problems linked to cable topology such as bridged-taps, single wire-tap, mismatched cable segments and all in-house problems such as missing POTS splitters, presence of surge protections, RFI coming from switching power supply units, etc. should be eliminated.

The method according to the invention shall typically be computer-implemented on a data processing system or computing device under control by the network operator. A data processing system or computing device that is operated according to the present invention can include a workstation, a server, a laptop, a desktop, a hand-held device, a mobile device, a tablet computer, or other computing device, as would be understood by those of skill in the art.

The data processing system or computing device can include a bus or network for connectivity between several components, directly or indirectly, a memory or database, one or more processors, input/output ports, a power supply, etc. One of skill in the art will appreciate that the bus or network can include one or more busses, such as an address bus, a data bus, or any combination thereof, or can include one or more network links. One of skill in the art additionally will appreciate that, depending on the intended applications and uses of a particular embodiment, multiple of these components can be implemented by a single device. Similarly, in some instances, a single component can be implemented by multiple devices.

The data processing system or computing device can include or interact with a variety of computer-readable media holding a computer program that enables to execute the method according to the present invention. For example, computer-readable media can include Random Access Memory (RAM), Read Only Memory (ROM), Electronically Erasable Programmable Read Only Memory (EEPROM), flash memory or other memory technologies, CDROM, digital versatile disks (DVD) or other optical or holographic media, magnetic cassettes, magnetic tape, magnetic disk storage or other magnetic storage devices that can be used to encode information and can be accessed by the data processing system or computing device. The memory can include computer-storage media in the form of volatile and/or nonvolatile memory. The memory may be removable, non-removable, or any combination thereof. Exemplary hardware devices are devices such as hard drives, solid-state memory, optical-disc drives, or the like. The data processing system or computing device can include one or more processors that read data from components such as the memory, the various I/O components, etc.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A device (100) for quantifying network infrastructure degradation resulting from a physical phenomenon, said device (100) comprising:

   - a diagnosis engine (101) for collecting parameter values for N lines (LINE-1, LINE-2, ..., LINE-N) in a network, N being a first positive integer value greater than one;
   - a service impact engine (102) for calculating from said collected parameter values (111a) a service impact value for M different problem types (PROBLEM-1, PROBLEM-2, ..., PROBLEM-M) on each one of said N lines (LINE-1, LINE-2, ..., LINE-N), M being a second positive integer value; and
   - an aggregation engine (104) for aggregating service impact values (122) received from said service impact engine (102) for a predefined subset of lines out of said N lines (LINE-1, LINE-2, ..., LINE-N) and a predefined subset of problem types out of said M different problem types (PROBLEM-1, PROBLEM-2, ..., PROBLEM-M), said subset of lines being affected by said physical phenomenon and said subset of problem types being caused by said physical phenomenon.

2. A device (100) for quantifying network infrastructure degradation according to claim 1, wherein said aggregation engine (104) is adapted to sum said service impact values (122) calculated for said subset of problems and said subset of lines.

3. A device (100) for quantifying network infrastructure degradation according to claim 1, said device (100) further comprising:

- a confidence engine (103) for calculating from said collected parameter values (111b) a confidence value for said M different problem types (PROBLEM-1, PROBLEM-2, ..., PROBLEM-M) on each one of said N lines (LINE-1, LINE-2, ..., LtNE-N), each confidence value representing a probability of presence of a problem type on a line; and
- said aggregation engine (104) further being adapted to aggregate for each line in said predefined subset of lines only service impact values for problem types whose confidence value on said line exceeds a predefined confidence threshold.

4. A device (100) for quantifying network infrastructure degradation according to claim 1, wherein:

- said physical phenomenon is corrosion;
- said predefined subset of problem types comprises capacitive coupling and electromagnetic noise pick-up;
- said service impact value for capacitive coupling on a line corresponds to a first bit rate difference value obtained by a scaled sum across all sub-carriers of a difference between a measured channel frequency impulse response on said line and a theoretical achievable channel frequency response on said line in absence of corrosion;
- said service impact value for electromagnetic noise pick-up on said line corresponds to a second bit rate difference value obtained by a scaled sum across all sub-carriers of a difference between a theoretical background noise level on said line in absence of corrosion and a measured background noise level on said line; and
- said aggregating of service impact values comprises summing said service impact value for capacitive coupling and said service impact value for electromagnetic noise pick-up for said subset of lines.

5. A method for quantifying network infrastructure degradation resulting from a physical phenomenon, said method comprising:

- collecting parameter values for N lines (LINE-1, LINE-2, ..., LINE-N) in a network, N being a first positive integer value greater than one;
- calculating from said collected parameter values (111a) a service impact value for M different problem types (PROBLEM-1, PROBLEM-2, ..., PROBLEM-M) on each one of said N lines (LINE-1, LINE-2, ..., LINE-N), M being a second positive integer value; and
- aggregating service impact values (122) for a predefined subset of lines out of said N lines (LINE-1, LINE-2, ..., LINE-N) and a predefined subset of problem types out of said M different problem types (PROBLEM-1, PROBLEM-2, ..., PROBLEM-M), said subset of lines being affected by said physical phenomenon and said subset of problem types being caused by said physical phenomenon.

6. A data processing system comprising means for carrying out the method of claim 5.

7. A computer program comprising software code adapted to perform the method of claim 5.

8. A computer readable storage medium comprising the computer program of claim 7.

100

Fig. 1

Fig. 2

Fig. 3

Europäisches
Patentamt

European
Patent Office

Office européen
des brevets

## EUROPEAN SEARCH REPORT

Application Number

EP 12 29 0399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/012358 A1 (TOLLGRADE COMMUNICATIONS INC [US]; AFZAL MUHAMMAD AKBAR KHAN [US]; BAS) 22 January 2009 (2009-01-22) | 1,2,5-8 | INV. H04L12/26 H04M3/30 |
| Y | * abstract * * page 1, paragraph 3 - page 3, paragraph 16 * * page 6, paragraph 35 - page 7, paragraph 38 * * page 7, paragraph 42 - page 10, paragraph 50 * ----- | 3,4 | |
| Y | US 6 970 560 B1 (HENCH JOHN JOSEF [US] ET AL) 29 November 2005 (2005-11-29) | 3,4 | |
| A | * abstract * * column 1, line 38 - column 2, line 15 * * column 4, line 30 - line end * * column 6, line 35 - line 45 * * column 7, line 22 - column 8, line 42 * * column 9, line 1 - column 10, line 12 * * column 17, line 34 - line 50 * * column 31, line 25 - column 36, line 51 * * column 24, line 47 - column 26, line 10 * ----- | 1,2,5-8 | |
| A | US 2003/048756 A1 (CHANG PAUL [US] ET AL) 13 March 2003 (2003-03-13) * abstract * * page 1, paragraph 1 - paragraph 6 * * page 2, paragraph 44 - page 3, paragraph 46 * * page 5, paragraph 76 - page 6, paragraph 86 * ----- -/-- | 1-8 | |

| | | | TECHNICAL FIELDS SEARCHED (IPC) |
|---|---|---|---|
| | | | H04M H04L |

The present search report has been drawn up for all claims

| Place of search | Date of completion of the search | Examiner |
|---|---|---|
| Munich | 7 February 2013 | Avilés Martinez, M |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

.............................................................................................

& : member of the same patent family, corresponding
  document

EPO FORM 1503 03.82 (P04C01)

Europäisches
Patentamt
European
Patent Office
Office européen
des brevets

**EUROPEAN SEARCH REPORT**

Application Number

EP 12 29 0399

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 870 901 B1 (GUDMUNDSSON THORKELL [US] ET AL) 22 March 2005 (2005-03-22)<br>* abstract *<br>* column 1, line 39 - column 2, line 38 *<br>* column 6, line 58 - column 8, line 5 *<br>* column 8, line 62 - column 10, line 41 *<br>* column 12, line 19 - line 24 *<br>* column 13, line 5 - column 14, line 50 *<br>* column 18, line 52 - column 19, line 33 * | 1-8 | |

-----

TECHNICAL FIELDS
SEARCHED (IPC)

The present search report has been drawn up for all claims

| Place of search | Date of completion of the search | Examiner |
|---|---|---|
| Munich | 7 February 2013 | Avilés Martinez, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................................................

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 12 29 0399

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2013

| Patent document cited in search report | | Publication date | Patent family member(s) | | Publication date |
|---|---|---|---|---|---|
| WO 2009012358 | A1 | 22-01-2009 | DE 112008001831 | T5 | 22-07-2010 |
| | | | GB 2463607 | A | 24-03-2010 |
| | | | US 2010278050 | A1 | 04-11-2010 |
| | | | WO 2009012358 | A1 | 22-01-2009 |
| US 6970560 | B1 | 29-11-2005 | NONE | | |
| US 2003048756 | A1 | 13-03-2003 | US 6891803 | B1 | 10-05-2005 |
| | | | US 2003048756 | A1 | 13-03-2003 |
| | | | US 2005249332 | A1 | 10-11-2005 |
| US 6870901 | B1 | 22-03-2005 | NONE | | |

EPO FORM P0459

For more details about this annex : see Official Journal of the European Patent Office, No. 12/82